**Europäisches Patentamt**

(19) **European Patent Office**

**Office européen des brevets**

(11) Numéro de publication: **0 165 187 B1**

(12) **FASCICULE DE BREVET EUROPEEN**

(45) Date de publication du fascicule du brevet:
**07.01.88**

(21) Numéro de dépôt: **85420095.3**

(22) Date de dépôt: **15.05.85**

(51) Int. Cl.⁴: **A 47 J 27/04**, A 47 J 39/00

(54) **Appareil de cuisson à injection de vapeur à pression atmosphérique.**

(30) Priorité: **17.05.84 FR 8407985**

(43) Date de publication de la demande:
**18.12.85 Bulletin 85/51**

(45) Mention de la délivrance du brevet:
**07.01.88 Bulletin 88/1**

(84) Etats contractants désignés:
**AT BE CH DE GB IT LI NL SE**

(56) Documents cités:
**DE - C - 669 675**
**FR - A - 434 055**
**FR - A - 899 497**
**FR - A - 2 396 927**
**GB - A - 1 092 283**
**US - A - 1 659 513**
**US - A - 3 289 571**

(73) Titulaire: **Jovanovic, Dragomir, 6 Impasse Jean Moulin, F-38000 Pont-de-Claix Isère (FR)**

(72) Inventeur: **Jovanovic, Dragomir, 6 Impasse Jean Moulin, F-38000 Pont-de-Claix Isère (FR)**

(74) Mandataire: **Perrier, Jean-Pierre et al, Cabinet GERMAIN & MAUREAU 12 rue de la République, F-42000 St-Etienne (FR)**

ACTORUM AG

## Description

Dans la vie ménagère, pour cuire des aliments à la vapeur, il est courant d'avoir recours à un autocuiseur composé d'une cocotte et d'un couvercle lié l'un à l'autre par des moyens de fermeture étanches et avec serrage, de manière à résister à la pression.

La cuisson par vapeur sous pression dans un récipient fermé entraîne de nombreuses contraintes. C'est ainsi qu'il rend impossible le contrôle de cuisson des aliments sans procéder à une décompression et à une ouverture du récipient, donc sans augmenter le temps de cuisson. De plus, ce mode de cuisson exige une vigilance permanente en cours de cuisson et lors de la décompression. Enfin, la nécessité d'utiliser un récipient résistant à la pression conduit à un appareillage lourd, onéreux, encombrant, difficilement rangeable et de nettoyage fastidieux.

On connaît également par le brevet britannique 1 092 283 un appareil de chauffage des aliments comprenant un récipient fermé avec couvercle posé raccordable à une source de vapeur. Pour obtenir une cuisson lente des aliments disposés dans le récipient, de tels appareils consomment une grande quantité de vapeur donc d'énergie qui, pour l'essentiel est inutilisée et s'échappe à l'extérieur ou condense sur les parois du récipient.

La demande de brevet français 2 396 927 décrit un appareil comportant une chaudière débitant de la vapeur dans un enceinte de cuisson. La vapeur, mélangée à l'air chauffé à 95°C, condense sur les aliments mais aussi sur les parois de l'enceinte de sorte qu'une partie importante de sa chaleur est perdue et que le rendement énergétique est peu élevé.

La présente invention a pour but de fournir un appareil de cuisson à injection de vapeur, fonctionnant à pression atmosphérique, utilisant des récipients fermés à couvercle posé et raccordables à une source de vapeur, consommant peu d'énergie, ne présentant pas les inconvénients de cuiseurs sous pression et procurant un mode de cuisson propre, commode et sans danger permettant, non seulement, le contrôle régulier de la cuisson, mais aussi d'associer à la cuisson à la vapeur un mode de cuisson différent.

Cet appareil comprend, une enceinte de cuisson, fermée avec porte d'accès, apte à contenir le récipient raccordable à une source de vapeur, des moyens de production de vapeur à fonctionnement, intermittent et instantané, autorégulé et contrôlé par minuterie, débitant par au moins une buse d'injection de vapeur disposée dans l'enceinte de cuisson et apte à être raccordée au récipient, et des moyens de chauffage de cette enceinte aptes à lui communiquer, pendant la cuisson à la vapeur, une température d'au moins 100°C pour porter le récipient à une température empêchant la condensation de la vapeur sur lui et pour isoler ce récipient de l'air extérieure au moyen de l'air chaud ambiant.

Pour cuire des aliments avec cet appareil, il suffit d'engager le récipient contenant les aliments dans l'enceinte de cuisson, de la raccorder à la buse de diffusion de vapeur, et de commander la mise en fonctionnement des moyens de chauffage de l'enceinte et des moyens de production instantanée de vapeur.

Les moyens de chauffage portent à une température, de l'ordre de 100°C, l'enceinte et le récipient. Ainsi, la vapeur produite est amenée, sans perte calorifique notable, dans un récipient qui, à au moins 100° C, est isolé de l'extérieur par la chaleur de l'air ambiant de l'enceinte. Cette vapeur ne condense pas sur le récipient mais sur les aliments. Elle libère ainsi sur l'aliment sa chaleur pénétrante et le cuit progressivement. La vapeur, en attente dans l'espace ambiant du récipient et qui n'est pas encore rentrée en contact avec l'aliment, reste prête à le faire et ne condense pas sur la paroi du récipient, car seul l'aliment peut provoquer cette condensation tant qu'il est à une température inférieure à 100°C.

Cet appareil permet donc de cuire des aliments avec de la vapeur à 100°C, donc pratiquement à pression atmosphérique, grâce à la protection thermique assurée par l'enceinte de cuisson portée à au moins 100°C.

L'utilisation de vapeur à pression atmosphérique permet d'utiliser des récipients en matériau transparent, donc d'assurer un contrôle permanent de la cuisson. Ce contrôle peut aussi être effectué en accédant au récipient sans qu'il soit nécessaire de décomprimer, comme dans les cuiseurs sous pression, et sans préjudice important sur le temps de cuisson.

Enfin, l'association des moyens de cuisson par injection de vapeur avec les moyens de chauffage de l'enceinte permet d'utiliser ces derniers moyens pour réaliser des dorages ou autres et d'augmenter ainsi le champ culinaire.

D'autres caractéristiques et avantages ressortiront de la description qui suit en référence au dessin schématique annexé représentant, à titre d'exemples non limitatifs plusieurs formes d'exécution de cet appareil de cuisson.

Figure 1 est une vue de côté en coupe longitudinale d'une première forme d'exécution de cet appareil,

Figure 2 en est une vue en coupe suivant 2-2 de fig. 1 montrant à échelle agrandie, une forme d'exécution des moyens de production instantanée de vapeur,

Figure 3 est une vue par dessus en coupe montrant une autre forme de réalisation de l'appareil,

Figure 4 est une vue de face en élévation avec coupe partielle montrant l'application de l'appareil à la cuisine collective,

Figure 5 est une vue en coupe transversale de l'appareil de fig. 4.

L'appareil, selon l'invention comprend, quelle que soit sa forme de réalisation, une enceinte de cuisson désignée de façon générale par (A), des moyens de production instantanée de vapeur désignés par (B) et au moins un récipient (C) apte à pénétrer dans l'enceinte de cuisson (A).

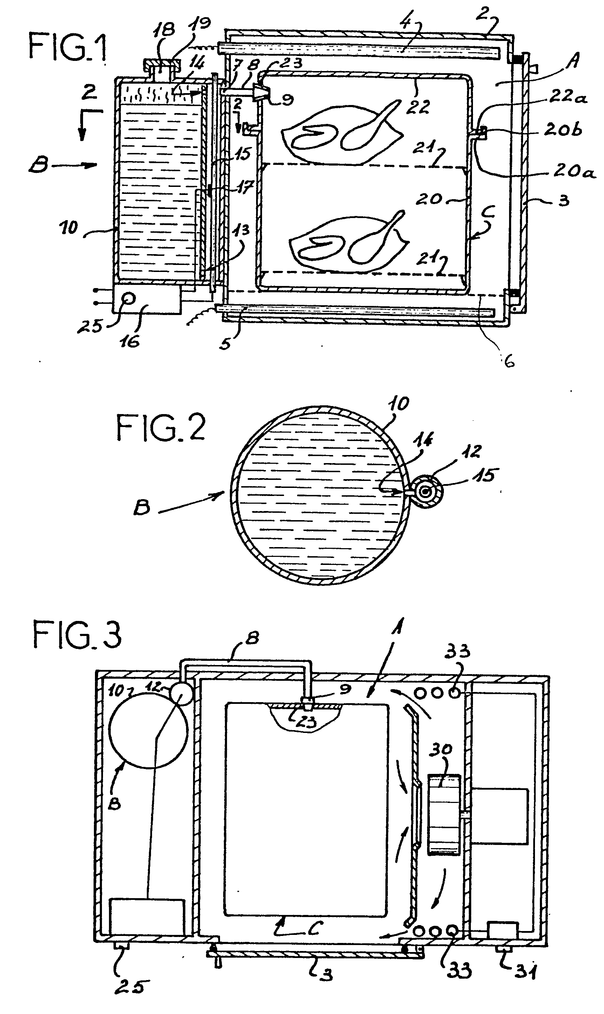

Dans la forme d'exécution représentée à la fig. 1, l'enceinte de cuisson (A) est constituée par un four électrique (2), muni d'une porte d'accès (3), de moyens de chauffage électriques, constitués par des résistances respectivement de voûte (4) et de sole (5), et éventuellement de moyens d'isolation périphérique non représentés. Ce four comporte également, de façon connue, une grille (6) apte à supporter un récipient.

Les moyens de production instantanée de vapeur (B) sont accolés contre le four. Leur orifice de sortie de vapeur (7) est relié, par une conduite souple (8), à une buse (9) d'injection de vapeur.

Dans une forme d'exécution de l'invention, montrée en détail figure 2, les moyens de production de vapeur (B) sont constitués par une chaudière à production instantanée de vapeur composée d'un premier récipient cylindrique vertical (10), constituant réservoir d'eau, et d'un second récipient cylindrique vertical (12). Ce récipient (12), fixé contre le premier, communique avec celui-ci par un canal inférieur (13), de passage d'eau, et par un perçage supérieur (14), d'équilibrage des pressions. Le récipient (12) est traversé axialement par une résistance électrique de chauffage (15) dont les moyens de commande de son fonctionnement (16) sont associés à un capteur thermostatique (17). Le diamètre intérieur du récipient (12), bien plus faible que celui du récipient (10) formant réservoir, est déterminé en fonction du diamètre extérieur de la résistance (15) et de manière que le logement annulaire formé autour de cette résistance soit de faible épaisseur pour obtenir une évaporation rapide de l'eau contenue dans ce logement. Le récipient cylindrique (10) est muni à sa partie supérieure d'un orifice de remplissage (18) avec bouchon d'obturation (19).

Il est à noter que le niveau de remplissage en eau des deux récipients (10 et 12) est déterminé pour rester en dessous de l'orifice (7) de sortie de la vapeur.

Dès que les moyens (16) de la chaudière commandent l'alimentation de la résistance (15), celle-ci dégage des calories qui engendrent la transformation de l'eau en vapeur. Cette vapeur s'échappe par l'orifice (7) et, par le tuyau (8), parvient à la buse d'injection (9). Dès que la résistance atteint une température excessive susceptible de l'endommager, le capteur (17) intervient sur les moyens de commande (16) afin qu'ils interrompent l'alimentation de la résistance. Inversement, dès que la température de la résistance s'est suffisamment abaissé, les mêmes moyens (17) commandent l'alimentation de la résistance. Cette disposition permet d'obtenir de la vapeur instantanée sans risque de détérioration de la résistance.

Le récipient (C), destiné à recevoir les aliments, est composé d'une gamelle (20) et d'un couvercle (22). Ce couvercle est posé sur la gamelle (20) et est en contact d'étanchéité avec elle par son propre poids. Dans la forme d'exécution représentée, une collerette (22a) du couvercle (22) repose sur une collerette (20a) avec retour périphérique (20b) bordant l'ouverture de la gamelle (20). Cette disposition favorise le positionnement du couvercle par rapport à la gamelle et permet d'obtenir une étanchéité relative suffisante entre les deux éléments du récipient. Le couvercle (22) est muni d'une ouverture (23) apte à recevoir la buse (97) d'injection de vapeur. Comme montré fig. 1, le récipient (C) peut comporter des grilles de séparation intérieures (21) permettant de supporter divers aliments.

Cet appareil de cuisson est complété par un organe de réglage de la température fournie par les résistances (4 et 5) de l'enceinte de cuisson (A) et d'une minuterie (25) déterminant le temps de fonctionnement de la chaudière (B).

Lorsque le récipient (C) est introduit dans le four, et déposé sur la grille (6), la buse d'injection (9) est introduite dans l'ouverture (23) du couvercle puis la porte du four est fermée. Enfin, tandis que les moyens de chauffage (4 et 5) sont mis en fonctionnement, la minuterie (25), associée à la chaudière (B) est actionnée.

En fonctionnement, la chaudière envoie des flux discontinus de vapeur dans le récipient (C). Ces flux de vapeur qui se condensent sur l'aliment assurent progressivement sa cuisson. Lorsque l'aliment est porté à une température suffisante et que la vapeur ne condense plus sur lui, l'excès de vapeur peut s'échapper du récipient en passant entre les collerettes (20a-22a) en contact d'appui.

Grâce à la disposition verticale de la chaudière, au fur et à mesure de la consommation de vapeur, le niveau d'eau s'abaisse dans le réservoir (10) et dans le récipient (12). Il en résulte que la quantité de vapeur émise par chaque flux de vapeur diminue progressivement durant la cuisson, proportionnellement aux besoins de cette cuisson, et que cette production de vapeur est autorégulée par la seule construction de la chaudière sans recours à aucun autre moyen.

Si le récipient n'est pas en verre, pour contrôler la cuisson, il suffit, après avoir ouvert la porte (3), de soulever le couvercle (22). Cette opération ne présente aucun danger, compte tenu de l'absence de pression dans le récipient, et n'intervient pas sur le temps de cuisson.

Cet appareil permet d'obtenir une très bonne cuisson en mettant en œuvre des quantités de vapeur réduites et avec un rendement très favorable. Ainsi, avec une chaudière ayant une puissance électrique de 750 Watts et un four ayant une puissance électrique de 650 Watts, il suffit de sensiblement 20 minutes pour cuire 2,5 kilogrammes de pommes de terre. Dans ces conditions, l'énergie consommée est de 310 Watts se répartissant à raison de 250 Watts pour la chaudière et de 60 Watts pour le four. Il est à noter que, dans ces conditions, environ 500 grammes de vapeur ont été produits et condensés pour effectuer la cuisson en mettant en œuvre une chaudière de 750 Watts.

Il est à noter que, durant la phase de cuisson à la vapeur, il suffit que les moyens de chauffage portent la température de l'enceinte (A) à une valeur de 100°C, mais il est évident que ces éléments de chauffage peuvent être plus puissants pour assurer une cuisson mixte. Dans ce cas, après cuisson à la vapeur, le couvercle (22) est retiré pour permettre, par exemple, le gratinage par la résistance (4) ou par une rampe infra-rouge complémentaire de cette résistance.

Cet appareil s'adresse en premier lieu à la cuisine ménagère où il étend avantageusement le domaine des cuissons dans un four avec celui des cuissons dans une cocotte sous-pression, sans en avoir les désavantages. L'utilisateur d'un tel four économise donc le prix d'achat d'une cocotte sous pression, ce qui réduit considérablement son investissement tout en lui permettant d'effectuer les deux service de cuisson.

La forme d'exécution représentée à la fig. 3 se différencie de la précédente par le fait que le four (2) est muni de moyens de chauffage à air pulsé ou à convection forcée. Plus précisément, une mototurbine (30) fait circuler en permanence l'air ambiant à travers des résistances électriques (33) et dans l'enceinte. Exceptée cette différence, cet appareil est en tous points similaire à celui de la forme d'exécution précédente et est accolé, comme lui, à une chaudière (B) à production instantanée de vapeur. Lors du fonctionnement de cet appareil, les moyens de chauffage de l'enceinte sont réglés par le thermostat (31) de manière à porter cette dernière à une température d'au moins 100°C afin d'assurer l'isolation du récipient (C) dans la phase de cuisson à la vapeur.

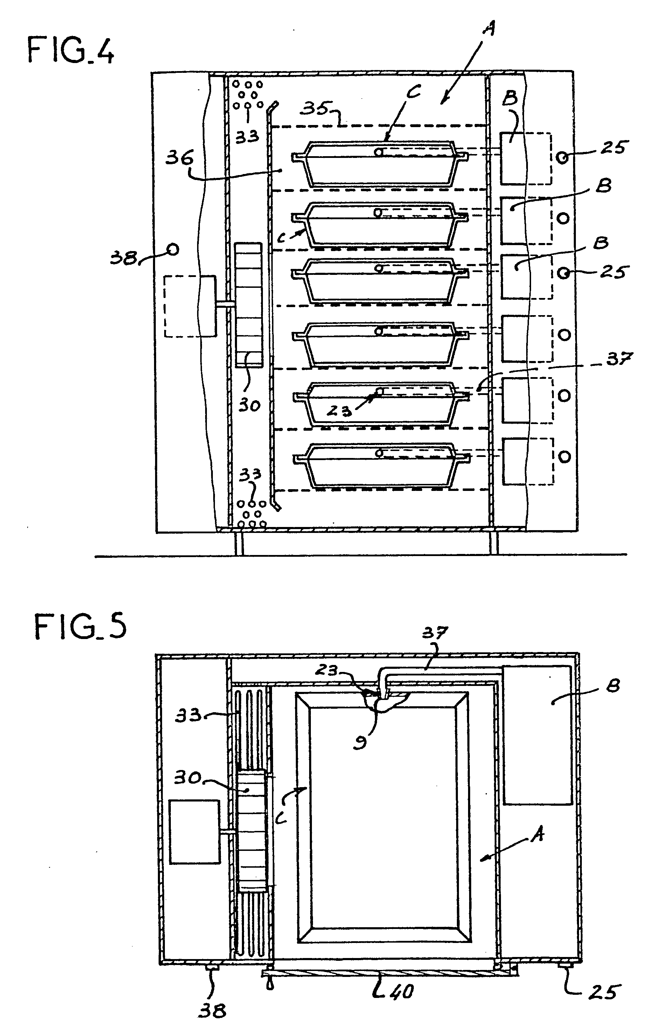

La forme d'exécution des figures 4 et 5 correspond à un appareil pour la cuisine collective. L'enceinte de cuisson (A) est divisée, par des moyens aptes chacun à supporter un récipient, telles que des grilles (35), en plusieurs compartiments (36) pouvant chacun recevoir un récipient (C). Chaque compartiment (36) est associé à une chaudière (B) à production instantanée de vapeur communiquant par une tuyauterie (37) avec une buse d'injection de vapeur (9). Cette buse fait saillie du fond du compartiment et est munie de moyens d'encliquetage, de type connu, apte à coopérer avec des moyens complémentaires juxtaposés à l'ouverture postérieure (23) dont est muni le récipient (C). Chaque chaudière est associée à une minuterie individuelle (25) qui détermine son temps de fonctionnement.

Les moyens de chauffage de l'enceinte de cuisson sont, dans la forme d'exécution représentée, du type à air pulsé ou convection forcée et comprennent une mototurbine (30) et des résistance électriques (33). La température des résistances électriques est déterminée par un thermostat réglable (38). De façon connue, cette armoire comporte au moins une porte frontale (40) et, de préférence, autant de portes (40) qu'elle comporte de compartiments (36).

On conçoit aisément que, grâce à cet agencement, tous les récipients (C) contenus dans l'enceinte de cuisson (A) sont portés à la même température de l'ordre de 100°C par les moyens de chauffage de cette enceinte, mais qu'ils peuvent aussi être soumis à des cuissons à la vapeur de temps différents par le seul réglage des minuteries (25) associées à leur chaudières individuelles.

Dans ce dernier cas, l'extraction de l'un des récipients ne perturbe pas le fonctionnement de l'enceinte et permet la continuation de la cuisson dans les autres récipients.

Cette application de l'invention à la cuisine collective est particulièrement intéressante puisque, à partir d'un appareil moins onéreux qu'un cuiseur sous pression, il permet de combiner la cuisson à la vapeur avec la cuisson à air chaud et radiations.

**Revendications**

1. Appareil de cuisson à injection de vapeur à pression atmosphérique du type mettant en œuvre un récipient (C) fermé par un couvercle posé (22) et raccordable à une source de vapeur caractérisé en ce qu'il comprend une enceinte de cuisson (A), fermée avec porte d'accès, apte à contenir le récipient (C), des moyens de production de vapeur à fonctionnement, intermittent et instantané, autorégulé et contrôlé par minuterie, débitant par au moins une buse (9) à injection de vapeur disposée dans l'enceinte (A) et apte à être raccordée au récipient (C) et des moyens de chauffage (4-5-30-33) de cette enceinte aptes à lui communiquer, pendant la cuisson à la vapeur, une température d'au moins 100°C pour porter le récipient (C) à une température empêchant la condensation de la vapeur sur lui et pour isoler ce récipient de l'air extérieur par l'air ambiant chaud.

2. Appareil selon la revendication 1, caractérisé en ce que les moyens de production de vapeur sont accolés à l'enceinte de cuisson (A) et sont constituées par un premier récipient cylindrique vertical (10), constituant réservoir d'eau et comportant un orifice (18) de remplissage, et par un second récipient cylindrique vertical (12) qui, fixé contre le premier, est traversé sensiblement axialement par une résistance électrique (15) de chauffage avec laquelle il forme un logement annulaire de faible épaisseur, logement communiquant, d'une part, avec le premier récipient (10) par un canal inférieur (13) de passage d'eau et par un orifice supérieur (7) de sortie de vapeur avec une conduite (8) raccordée à la buse d'injection (9).

3. Appareil selon la revendication 2, caractérisé en ce que la résistance de chauffage (15) est associée à un capteur thermostatique (17) réagissant sur les moyens de commande (16) de son alimentation en électricité.

4. Appareil selon la revendication 1 et l'une quelconque des revendications 2 et 3, caractérisé en ce que l'enceinte de cuisson (A) est divisée par des moyens (35), aptes à supporter un récipient, en plusieurs compartiments (36) associés chacun à une porte d'accès indépendante (40) et à des moyens (B) de production de vapeur indépendants, avec minuterie individuelle (25) de réglage de fonctionnement.

5. Appareil selon la revendication 1 et l'une quelconque des revendications 2 à 4, caractérisé en ce que la gamelle (20) du récipient est munie d'une collerette extérieure (20a) avec retour coudé périphérique (20b) de positionnement d'une collerette extérieure (22a) du couvercle (22), couvercle en contact d'étanchéité par son seul poids avec cette gamelle (20).

**Patentansprüche**

1. Kochgerät mit Einblasung von Dampf unter atmosphärischem Druck, welches einen durch einen aufgelegten Deckel (22) verschlossenen und an eine Dampfquelle anschliessbaren Behälter (C) verwendet, dadurch gekennzeichnet, dass es eine durch eine Zugangstür verschliessbare Kochkammer (A) zur Aufnahme des Behälters (C) umfasst, ferner Dampferzeugungseinrichtungen, die intermittierend und schnell ansprechend, selbstregulierend und durch Zeitschalter gesteuert arbeiten und über wenigstens eine in der Kochkammer (A) angeordnete und mit dem Behälter (C) verbindbare Dampfeinblasdüse (9) Dampf liefern, sowie Heizeinrichtungen (4, 5, 30, 33) für die Kochkammer, welche diese während des Kochens mit Dampf auf eine Temperatur von wenigstens 100°C heizen, um den Behälter (C) auf eine Temperatur zu bringen, welche ein Kondensieren des Dampfes an diesem verhindert und um den Behälter durch warme Umgebungsluft von der Aussenluft zu isolieren.

2. Kochgerät nach Anspruch 1, dadurch gekennzeichnet, dass die Dampferzeugungseinrichtungen an die Kochkammer (A) angebaut sind und aus einem ersten vertikalen Zylinderbehälter (10) bestehen, welcher ein Wasserreservoir bildet und eine Füllöffnung (18) aufweist, sowie aus einem zweiten vertikalen Zylinderbehälter (12), welcher fest am ersten anliegt und im wesentlichen axial von einem elektrischen Heizwiderstand (15) durchsetzt ist, mit dem er einen Ringraum mit geringer Breite bildet, wobei der Ringraum einerseits mit dem ersten Zylinderbehälter (10) über eine untere Wasserleitung (13) und über eine obere Dampfauslassöffnung mit einer an die Einblasdüse (9) angeschlossenen Leitung (8) verbunden ist.

3. Kochgerät nach Anspruch 2, dadurch gekennzeichnet, dass der Heizwiderstand (15) an einen Thermostat-Messfühler (17) angeschlossen ist, welcher auf Steuermittel (16) zum Steuern von dessen elektrischer Stromversorgung einwirkt.

4. Kochgerät nach Anspruch 1 und einem der Ansprüche 2 und 3, dadurch gekennzeichnet, dass die Kochkammer (A) durch jeweils zur Aufnahme eines Behälters bestimmte Mittel (35) in mehrere Abteilungen (36) geteilt ist, deren jede mit einer eigenen Zugangstür (40) und mit eigenen Dampferzeugungseinrichtungen (B) versehen ist und jeweils einen individuellen Zeitschalter (25) für die Funktionssteuerung aufweist.

5. Kochgerät nach Anspruch 1 und einem der Ansprüche 2 bis 4, dadurch gekennzeichnet, dass der Untertopf des Behälters (20) mit einem nach aussen abgewinkelten Randabschnitt (20a) und einem an dessen Umfang angeordneten, in die Umfangsrichtung zurückgebogenen Randabschnitt (20b) zum Positionieren eines nach aussen abgewinkelten Randabschnittes (22a) des Deckels versehen ist, wobei der Deckel mit dem Untertopf (20) allein durch sein Gewicht in abdichtendem Kontakt ist.

**Claims**

1. Cooking apparatus for cooking by injected steam at atmospheric pressure of the type using a vessel (C) closed by a superposed lid (22) and connectable to a steam source characterized by featuring a cooking compartment (A) closed by an access door and capable to receive the vessel (C), having the means of steam production with an instantaneous and intermittent function, autoregulated and controlled by a timer delivering steam through at least one steam injector (9) placed in the cooking compartment (A) the later fit to be connected with the vessel (C), further having heating means (4-5-30-33) for the cooking compartment suitable to heat the said compartment during the cooking by steam to at least 100°C in order to procure to the vessel (C) a temperature prohibiting the condensation of steam on the vessel and also isolating the vessel from the outside atmosphere by the internal ambiant hot air.

2. Apparatus according to claim 1, characterized in that the steam production means are fitted into the cooking compartment (A) and consist from a first cylindrical vertical vessel (10) being the water reservoir fitted with filling orifice (18) and by a second cylindrical and vertical vessel (12) fixed closely to the reservoir and fitted with an axial electric heating element (15) forming thus an annular thin water space, the said water space, communicating with the first water reservoir (10) through an inferior water passage (13) and through the superior orifice (7) delivering steam with its piping (8) connected to the steam injector (9).

3. Apparatus according to claim 2, characterized in that the heating element (15) is associated to the bulb of the thermostat (17) acting on the regulation means (16) of its power supply.

4. Apparatus according to claim 1 or one of the claims 2 and 3, characterized in that the cooking compartment (a) is devided by supporting means (35), capable to support a vessel, in several compartments (36) each compartment feated with an independent access door (40) and independent steam production means (B) equiped with an individual timer (25) for the regulation of the functioning.

5. Apparatus according to claim 1 and one of claims 2 to 4, characterized in that the lower part of the vessel (20) has an outward extended and vertically bent edge (20A and 20B) serving to position the external edge (22A) of the lid (22) which lid obtains its tight contact with the vessel (20) only by its proper weight.

FIG.1

FIG.2

FIG.3

# FIG.4

# FIG.5